## Europäisches Patentamt
## European Patent Office
## Office européen des brevets

(19)

(11) Veröffentlichungsnummer: **0 027 955**
**B1**

(12) **EUROPÄISCHE PATENTSCHRIFT**

(45) Veröffentlichungstag der Patentschrift:
08.08.84

(51) Int. Cl.³: **C 08 L 77/00**

(21) Anmeldenummer: 80106252.2

(22) Anmeldetag: 15.10.80

(54) **Polyamidformmassen.**

(30) Priorität: 27.10.79 DE 2943515

(43) Veröffentlichungstag der Anmeldung:
06.05.81 Patentblatt 81/18

(45) Bekanntmachung des Hinweises auf die Patenterteilung:
08.08.84 Patentblatt 84/32

(84) Benannte Vertragsstaaten:
DE FR GB IT

(56) Entgegenhaltungen:
DE - A - 2 632 957
DE - A - 2 730 749
FR - A - 1 444 425
FR - A - 2 343 018
US - A - 3 218 371
US - A - 4 197 379

Encyclopedia of Polymer Science and Technology, Vol. 10, S. 393-395

Die Akte enthält technische Angaben, die nach dem Eingang der Anmeldung eingereicht wurden und die nicht in dieser Patentschrift enthalten sind.

(73) Patentinhaber: BAYER AG, Konzernverwaltung RP Patentabteilung, D-5090 Leverkusen 1 Bayerwerk (DE)

(72) Erfinder: Nielinger, Werner, Dr., Bärenstrasse 21, D-4150 Krefeld (DE)
Erfinder: Brassat, Bert, Dr., Bethelstrasse 24, D-4150 Krefeld 1 (DE)
Erfinder: Binsack, Rudolf, Dr., Bethelstrasse 4 a, D-4150 Krefeld 1 (DE)
Erfinder: Neuray, Dieter, Dr., Buschstrasse 149, D-4150 Krefeld (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der vorliegenden Erfindung sind thermoplastische Mischungen aus zumindest teilaromatischen, vorzugsweise auch amorphen Polyamiden und Copolymeren aus Alkadien mit 4—6 C-Atomen und Acrylnitril, sogenannten Nitrilkautschuken.

Polyamide besitzen eine Reihe von hervorragenden Eigenschaften, wie Steifigkeit und Härte, wodurch sie sich besonders zur Herstellung von Formteilen auf dem technischen Sektor eignen.

Um auch ein optimales Zähigkeitsniveau bei den Polyamiden zu erreichen, wurden bereits zahlreiche Vorschläge gemacht, so z. B. auch das Abmischen mit anderen Polymeren.

Beispielsweise wird im DRP 744 119 die Verwendung von Polybutadien und Polyisopren zur Modifizierung von Polyamid beschrieben. — Versuche, Polybutadien in handelsüblichen Extrudern bei Verweilzeiten von 10—60 s in aliphatische Polyamide einzuarbeiten, führten zu brüchigen, stark abschiefernden Produkten, die technisch nicht brauchbar sind.

Nach der Lehre der DE-AS 1 301 504 werden 95—40 Gew.-% Butadien-Copolymerisate und 5—60 Gew.-% Polyamide auf der Basis von Caprolactam, Laurinlactan, Aminoundecansäure oder Adipinsäure und Hexamethylendiamin gemischt. Dadurch werden, insbesondere nach Zusatz von Metallsalzen, Festigkeit und Dehnung des Kautschuks erhöht.

In der DE-OS 2 632 957 werden Mischungen aus aliphatischen Polyamiden und Diencopolymerisaten beschrieben. Die Diencopolymerisate dienen zur Weichmachung von 6- und 66-Polyamiden.

Trotz der ausgezeichneten Kerbschlagzähigkeit dieser Polyamidlegierungen ist die Biegefestigkeit der Produkte für manche Einsatzgebiete unzureichend.

Überraschend wurde nun gefunden, daß die Zähigkeit von zumindest teilaromatischen, vorzugsweise teilaromatischen, amorphen Polyamiden durch Zusatz von Copolymeren aus Alkadienen und Acrylnitril deutlich verbessert werden kann, ohne daß andere mechanische Eigenschaften der Polyamide wie Wärmeformbeständigkeit, Biegefestigkeit nennenswert beeinflußt werden.

Dies war auch nicht bei Kenntnis der FR-A-2 343 018 zu erwarten, da gemäß der Lehre dieser Patentschrift vernetzte Kautschuke mit Polyamiden modifiziert werden und Formkörper mit über 50% Polyamid als hart und steif, mit verminderter Härte beschrieben werden.

Gegenstand der Erfindung sind daher Mischungen aus thermoplastischen Polyamiden und Copolymerisaten aus Alkadienen mit $C_4—C_6$ und Acrylnitril, die dadurch gekennzeichnet sind, daß die Mischungen aus

1. 70—90 Gew.-% eines zumindest teilaromatischen, vorzugsweise teilaromatischen, amorphen Polyamids und
2. 30—10 Gew.-% eines nicht vulkanisierten Copolymerisats aus
   a) 99—60 Gew.-%, vorzugsweise 92—70 Gew.-% Alkadienen mit 4—6 C-Atomen und
   b) 40—1 Gew.-%, vorzugsweise 8—30 Gew.-% Acrylnitril mit einem Molgewicht von 2000—50 000 und
3. gegebenenfalls den üblichen Hilfsstoffen bestehen,
   wobei die Summe aus a) und b) und 1—3, jeweils 100 Gew.-% beträgt.

Als zumindest teilaromatische, vorzugsweise auch amorphe Polyamide kommen vorzugsweise folgende Produkte in Betracht, wie sie in den deutschen Offenlegungsschriften 1 770 336, 1 645 537, 2 156 723, 2 635 085, 2 647 311, 2 732 928 sowie in der US-Patentschrift 3 150 117 beschrieben sind. Sie werden erhalten durch Polykondensation von Diaminen wie Ehtylendiamin, Hexamethylendiamin, Dekamethylendiamin, Dodekamethylendiamin, 2,2,4- und/oder 2,4,4-Trimethylhexamethylendiamin, m- oder p-Xylylendiamin, Bis-(4-aminocyclohexyl)-methan, Bis-(4-aminocyclohexyl)-propan, 3,3'-Dimethyl-4,4'-diamino-dicyclohexylmethan, 3-Aminomethyl-3,5,5-trimethyl-cyclohexylamin, 2,5- und/oder 2,6-Bis-(aminomethyl)-norbornan oder 1,4-Diaminomethylcyclohexan mit Dicarbonsäuren wie Isophthalsäure oder Terephthalsäure. Selbstverständlich sind auch teilaromatische amorphe Polyamide, die durch Polykondensation mehrerer Monomerer erhalten werden, geeignet, ferner solche teilaromatische amorphe Polyamide, die unter Zusatz von Aminocarbonsäuren wie ε-Aminocapronsäure, ω-Aminoundecansäure, ω-Aminolaurinsäure oder ihren Lactamen, und/oder Dicarbonsäuren wie Oxalsäure, Adipinsäure, Azeloinsäure, Decandicarbonsäure, Heptadecandicarbonsäure, 2,2,4- und/oder 2,4,4-Trimethyladipinsäure, hergestellt werden.

Besonders geeignete teilaromatische amorphe Polyamide sind die Polyamide hergestellt aus Isophthalsäure und Hexamethylendiamin; oder aus Isophthalsäure, Hexamethylen, -diamin und weiten Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und 65 Gew.-% Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

**0 027 955**

70—99 Mol-% des 4,4'-Diaminoisomeren,
1—30 Mol-% des 2,4'-Diaminoisomeren,
0— 2 Mol-% des 2,2'-Diaminoisomeren und

gegebenenfalls entsprechend höher kondensierten Diaminen, die durch Hydrierung von Diaminodiphenylmethan technischer Qualität erhalten werden. Die Isophthalsäure kann bis zu 30% durch Terephthalsäure ersetzt sein.

Als Nitrilkautschuke verwendet man vorzugsweise nicht vulkanisierte Copolymeren aus Butadien und/oder Isopren und/oder Pentadien-1,4 und Acrylnitril.

Die Nitrilkautschuke können als Festkautschuk, in Form von Krümeln oder in Pulverform eingesetzt werden. Das Molgewicht liegt im Bereich von 2000—500 000, vorzugsweise im Bereich von 20 000—250 000. Vorzugsweise werden die Nitrilkautschuke in Pulverform verwendet.

Die Einarbeitung der Nitrilkautschuke in die Polyamide erfolgt vorteilhaft in den üblichen Schneckenpressen vorzugsweise bei Temperaturen von 230—300° C. Es sind sowohl Einwellen-, als auch Zweiwellenmaschinen geeignet. Die Abmischungen können auch auf Walzwerken oder Innenmischern hergestellt werden, wie sie von der Kautschukverarbeitung her bekannt sind. Hierbei ist jedoch auf den Ausschluß von Luft zu achten. Nach einer bevorzugten Mischmethode, insbesondere um den Mischvorgang zu verkürzen, können die Mischungen unter Einwirkung von Scherfeldern mit Schergradienten von > 150 sec$^{-1}$ in den üblichen Schneckenextrudern, vorzugsweise in Doppelwellenextruder, erzeugt werden. Die Mischungen werden nicht vulkanisiert.

Die erfindungsgemäßen thermoplastischen Formmassen können die üblichen Zusätze enthalten wie Gleit- und Entformungsmittel, Füllstoffe, Verstärkungsmittel, Farbstoffe und Pigmente sowie Stabilisatoren und Brandschutzmittel. Zu nennen sind u. a. Glas- und Asbestfasern, Glaskugeln, Talkum, Wollastonit, Mikrovit, Kreide, Quarz, Titandioxid, Zinksulfid, Cadmiumsulfid, Ruß.

Die Zusatzstoffe setzt man bei der Compoundierung der Formmassen entweder in reiner Form oder als Konzentrate zu. Sie können aber auch in einer oder mehreren der Ausgangskomponenten enthalten sein.

Da sich die Produkte neben ihrer hohen Zähigkeit gleichzeitig durch ihre hohe Steifigkeit und gute Kriechstromfestigkeit auszeichnen, werden sie vorzugsweise zur Herstellung von Teilen im Maschinenbau, von technischen Geräten, im Automobilbau und auf dem Elektrosektor eingesetzt.

Beispiele 1—7

Ein Polyamid aus Isophthalsäure und Hexamethylendiamin wird mit einem Nitrilkautschuk auf einer Doppelwellenschnecke von Typ ZSK 53 der Firma Werner und Pfleiderer gemischt. Die Temperatur der Schmelze in der Schnecke beträgt ca. 272° C, der Durchsatz 18 kg/h, die Drehzahl 60 Umdrehungen/Minute.

Das Polyamid hat eine relative Viskosität von 2,8, gemessen an einer 1%igen Lösung in m-Kresol bei 25° C.

Der Nitrilkautschuk ist ein Copolymerisat aus 61 Gew.-% Butadien und 39 Gew.-% Acrylnitril (Perbunan N 3810®).

In der Tabelle 1 sind die Eigenschaften der Mischungen in Abhängigkeit von der Zusammensetzung dargestellt. In der ersten Spalte sind zum Vergleich die Werte für unmodifiziertes Polyamid angegeben.

3

Tabelle 1

Mischungen des Polyamids aus Isophthalsäure und Hexamethylendiamin mit Perbunan N 3810®

| Zusammensetzung | | Beispiele | | | | | | | |
|---|---|---|---|---|---|---|---|---|---|
| | | 1 Vergleich | 2 | 3 | 4 | 5 | 6 | 7 | Vergleich |
| Polyamid | Gew.-% | 100 | 95 | 90 | 85 | 80 | 75 | 70 | 65 |
| Nitrilkautschuk | Gew.-% | 0 | 5 | 10 | 15 | 20 | 25 | 30 | 35 |
| Eigenschaftswerte | | | | | | | | | |
| Kerbschlagzähigkeit (DIN 53 453) | kJ/m$^2$ | 2,5 | 13 | 18 | 21 | 23 | 22 | 19 | 25 |
| Grenzbiegespannung (DIN 53 452) | MPa | 156 | 118 | 114 | 102 | 94 | 95 | 67 | 52 |
| Wärmeformbeständigkeit nach Vicat, Meth. B (DIN 53 460) | °C | 124 | 122 | 123 | 122 | 121 | 122 | 115 | 112 |

### Beispiel 8

Ein Polyamid aus Isophthalsäure und Hexamethylendiamin ($\eta$ rel. 2.8) wird wie in den Beispielen 1—7 mit einem Nitrilkautschuk aus ca. 61 Gew.-% Butadien und ca. 39 Gew.-% Acrylnitril abgemischt. Die Kerbschlagzähigkeit dieser Mischung beträgt 55 kJ/m$^2$ und ihre Grenzbiegespannung liegt bei 94 MPa.

**Patentansprüche**

1. Thermoplastische Mischungen aus

1) 70—90 Gew.-% eines zumindest teilaromatischen Polyamids,
2) 10—30 Gew.-% eines nicht vulkanisierten Copolymerisats aus

    a) 99—60 Gew.-% Alkadien mit 4—6 C-Atomen und
    b) 40— 1 Gew.-% Acrylnitril mit einem Molgewicht im Bereich von 1000—500 000

3) gegebenenfalls üblichen Hilfsstoffen,

wobei sich die Summe aus 1) und 3) bzw. a) und b) jeweils auf 100 Gew.-% addiert.
    2. Mischungen nach Anspruch 1, dadurch gekennzeichnet, daß das Copolymerisat aus 92—70 Gew.-% der Komponente a) und 8—30 Gew.-% der Komponente b) aufgebaut ist.
    3. Mischungen nach Anspruch 1 und 2, dadurch gekennzeichnet, daß das Polyamid ein teilaromatisches, amorphes Polyamid ist.
    4. Mischungen nach Ansprüchen 1—3, dadurch gekennzeichnet, daß das Copolymerisat ein Copolymerisat aus Butadien und/oder Isopren und/oder Pentadien-1,4 und Acrylnitril ist.

**Claims**

1. Thermoplastic mixtures of

1) 70—90% by weight of an at least partly aromatic polyamide,
2) 10—30% by weight of a non-vulcanised copolymer of

    a) 99—60% by weight of an alkadiene with 4—6 C atoms and
    b) 40— 1% by weight of acrylonitrile with a molecular weight in the range of 2,000—500,000, and

3) optionally, customary auxiliaries,

**0 027 955**

the sum of 1) and 3) and the sum of a) and b) in each case being 100% by weight.

2. Mixtures according to Claim 1, characterised in that the copolymere is composed of 92—70% by weight of component a) and 8—30% by weight of component b).

3. Mixtures according to Claims 1 and 2, characterised in that the polyamide is a partly aromatic amorphous polyamide.

4. Mixtures according to Claims 1—3, characterised in that the copolymer ist a copolymer of butadiene and/or isoprene and/or 1,4-pentadiene and acrylonitrile.


**Revendications**

1. Mélanges thermoplastiques de

1)   70—90% en poids d'un polyamide au moins partiellement aromatique,
2)   10—30% en poids d'un copolymère non vulcanisé de

   a)   99—60% en poids d'alcadiène ayant 4 à 6 atomes de carbone et
   b)   40— 1% en poids d'acrylonitrile, avec un poids moléculaire de 2000 à 500 000

3)   le cas échéant, des substances auxiliaires classiques,

la somme de 1) et 3), respectivement, de a) et b) faisant dans chaque cas un total de 100% en poids.

2. Mélanges suivant la revendication 1, caractérisés en ce que le copolymère est constitué de 92 à 70% en poids du composant a) et de 8 à 30% en poids du composant b).

3. Mélanges suivant les revendications 1 et 2, caractérisés en ce que le polyamide est un polyamide amorphe partiellement aromatique.

4. Mélanges suivant les revendications 1—3, caractérisés en ce que le copolymère est un copolymère de butadiène et/ou d'isoprène et/ou de pentadiène-1,4 et d'acrylonitrile.

5